# EUROPEAN PATENT APPLICATION

(11) **EP 4 659 953 A1**
(43) Date of publication of application: **10.12.2025**
(21) Application number: 24179778.6
(22) Date of filing: 04.06.2024
(51) Int. Cl.: B32B 15/14, B32B 3/08, B32B 5/02, B32B 7/04, B32B 7/12, B32B 15/04, B64C 1/00

(54) **STRUCTURAL COMPONENT, METHOD FOR MANUFACTURING A STRUCTURAL COMPONENT AND AIRCRAFT**

(71) Applicant: AIRBUS Operations GmbH, 21129 Hamburg (DE)
(72) Inventor: Orlov, Dimitri, Hamburg (DE); Westphal, Robert, Hamburg (DE)
(74) Representative: Isarpatent

(57) **Abstract**

The present invention provides a structural component (1), in particular for an aircraft or spacecraft fuselage, comprising: a substrate (2) having an inner surface (2a); and a protection ply (3) for avoiding a destruction of a corrosion protection of the substrate (2), wherein the protection ply (3) is materially bonded to the inner surface (2a) of the substrate (2). Further the present invention provides a method (M) for manufacturing such a structural component (1), and an aircraft (10) or spacecraft comprising such a structural component (1), wherein the structural component is installed in a fuel tank area of the fuselage.

## Description

The invention relates to a structural component. In particular, the invention relates to a structural component for an aircraft or spacecraft fuselage. Further, the invention relates to a method for manufacturing a structural component. The invention is furthermore concerned with an aircraft or spacecraft containing a fuselage with such a structural component.

Moldings made of a laminate of at least one metal sheet and at least one fiber-reinforced polymer layer connected thereto (hereinafter referred to as a fiber metal laminate) are increasingly used in industries such as the transportation industry, for example in cars, trains, aircraft and spacecraft. Such laminates can for example be used in the wings, fuselage and tail panels and/or other skin panels for aircraft, and generally ensure an improved fatigue resistance of the aircraft component.

In case of installation of a protective liner inside of the fuel tank, the structural parts of an airplane need to be protected against frictional damages and abrasion of the corrosion protection layer. On the other hand the liner itself needs to be protected against frictional damage by the structural part. One known solution is an application of a thin sealant layer with a thickness of 0.2 mm in each frame-stringer-bay. The sealant application is highly time consuming and causes high manual workflow under very bad ergonomic conditions. This sealant layer can earliest be applied after structure assembler due to contamination risk during assembler process. Thus, there is a need to improve the sealant layer for forming parts of the wings or fuselage, for example.

Aspects of the invention may provide solutions for a quick and easy to manufacture installation concept of the sealant layer.

According to the invention, this problem is solved in each case by the subject matters of the independent claims.

According to a first aspect of the invention, a structural component, in particular for an aircraft fuselage or a spacecraft fuselage, is provided. The structural component comprises a substrate having an inner surface and a protection ply for avoiding a destruction of a corrosion protection of the substrate. The protection ply is materially bonded to the inner surface of the substrate.

According to a second aspect of the invention, a method for manufacturing a structural component, in particular for an aircraft fuselage or a spacecraft fuselage, in particular for a structural component according to the first aspect of the invention, is provided. The method comprises a method step of placing a substrate on a form tool. Moreover, the method comprises a method step of placing a protection ply on an inner surface of the substrate. Further, the method comprises a method step of applying heat and/or pressure to the substrate and the protection ply such that the protection ply materially bonds to the substrate.

According to a third aspect of the invention, an aircraft or spacecraft comprising a fuselage is provided. The fuselage comprises a structural component according to the first aspect of the invention. Alternatively or additionally, the fuselage comprises a structural component manufactured according to second aspect of the invention. Thereby, the structural component is installed in a fuel tank area of the fuselage.

A fundamental concept of the invention is to providing an integration of a liner protection feature as part of a fuselage skin. In particular, the substrate is configured for a fuselage skin of an aircraft.

A particular advantage in the solution according to an aspect of the invention is that a semi-automated manufacturing process can be provided. The semi-automated manufacturing process in particular has an advantage compared to the current fully manual workflow in the manufacturing of the sealant layer. Furthermore, an installation time of the protection ply can be reduced significantly.

Another advantage is that the protection ply can provide a higher positional tolerance of protection. A highly expensive manual workflow can be minimized. Further, the structural component according to the invention can provide a significant better accessibility during manufacturing on part level since a bad access in the closed tank areas can be omitted. Additionally, this contributes to better ergonomic conditions in the method for manufacturing the structural component.

Advantageous embodiments and further developments emerge from the description with reference to the figures.

According to some embodiments of the invention, the structural component further comprises structure parts, which are installed on the substrate, wherein the protection ply extends at least in sections between the structure parts. Thus, the protection ply can be combined with existing structure parts.

According to some further embodiments of the invention, the structure parts are configured as a stringer or a frame or both. The frame and/or the stringer may be elongated structural stiffeners extending laterally and/or perpendicular relative to a longitudinal direction of the aircraft fuselage. In some embodiments of the invention, the frames may cross the stringers in a grid-like configuration.

According to some further embodiments of the invention, the protection ply comprises a composite material. Hence, composite materials with higher in service robustness can be used for the protection ply.

According to some further embodiments of the invention, the composite material comprises a glass fiber reinforced fabric prepreg.

According to some further embodiments of the invention, the composite material comprises an uni-directional glass fiber reinforced prepreg.

Prepregs, short for preimpregnated fibers, are semi-finished textile fibers that are pre-impregnated with special reactive resins like epoxy resin.

According to some further embodiments of the invention, the composite material comprises an epoxy film and/or adhesive film. For example, the composite material comprises the epoxy film and/or adhesive film without a glass reinforcement.

According to some further embodiments of the invention, the structural component further comprises a primer layer, which is disposed on the protection ply. For example, the primer layer can be disposed on a side of the protection ply, which is facing away from the substrate in relation to the protection ply. The primer layer can be disposed on the protection ply and on the inner surface of the substrate in an area, where the protection ply is not present. That means, the primer layer can coat the complete inner side of the structural component, so the protection ply and the area of the inner surface of the substrate, where the protection ply is omitted. The primer layer can be configured as a basic primer, which can be applied after bonding on complete surface including the protection ply.

According to some further embodiments of the invention, the substrate comprises a laminate having metal layers and an adhesive layer placed between and bonded to the metal layers. The adhesive layer may comprise a composite material. For example, the composite material can be selected from the group of carbon fiber composite, glass fiber composite, reinforced polymers, and other composite produced from two or more constituent materials.

The adhesive layer can be, preferably, reinforced with (glass) fibers. The fibers may be oriented individually or in groups, in one direction or in several different directions, depending on the loading conditions of the structural component. The adhesive layer preferably comprises synthetic polymers. Examples of suitable non-thermoplastic polymers are epoxy resins, unsaturated polyesters, vinyl esters, phenolic resins. Suitable thermoplastic polymers are, e.g., polyarylates (PAR), polysulphones (PSO), polyether sulphones (PES), polyether imides (PEI), or polyphenylene ethers (PEE), polyphenylene sulphide (PPS), polyamide-4,6, polyketone sulphide (PKS), polyether ketones (PEK), polyether ether ketone (PEEK), and polyether ketone-ketone (PEKK). Moreover, in addition to the adhesive that is part of the adhesive layer, adhesives can be used locally in other parts of the laminate or of the structural component. In principle, all adhesives suitable for use in the adhesive layer are also suitable for use as 'local' adhesive. The adhesive layer can have a thickness similar to that of the metal layers. Preferred fibers for reinforcing the adhesive layers are continuous fibers or filaments of a material such as glass, aromatic polyamides ("aramids"), and carbon. The preferred glass fibers are S-2 glass or R-glass fibers. Also suitable are less expensive E-glass fibers. One suitable aramid fiber is made from poly-para-phenylene terephthalamide. The fibers may have a modulus of elasticity of about 60-650 GPa and an elongation at break of about 0.2-8%.

According to some further embodiments of the invention, the protection ply is materially bonded to one of the metal layers that corresponds to the inner surface of the substrate. Hence, the protection ply can be installed on the substrate on a subcomponent level with lower manufacturing costs.

Alternatively, the substrate comprises a monolithic metallic material, in particular a monolithic aluminum or an aluminum alloy or the like light metals. Due to its lower density and better specific strength compared to other common metals, aluminum is often used where the mass of a means of transport has to be moved and contributes to fuel consumption, in particular in the aircraft and aerospace industry.

Optionally, heat or pressure or both can be applied to the substrate and the protection ply by curing in an autoclave.

According to some further embodiments of the invention, the method further comprises a step of placing a primer layer on the protection ply.

According to some further embodiments of the invention, the substrate comprises metal layers and an adhesive layer, which are placed on the form tool as a sandwich in the order metal layer, adhesive layer and metal layer. Thus, the protection ply can be implemented during an already used and applied manufacturing process, in particular a manufacturing process of the aircraft skin.

According to some further embodiments of the invention, the substrate and the protection ply are materially bonded by co-bonding. Hence, an available infrastructure and/or a manufacturing process can be used by co-bonding of the substrate and the protection ply. Furthermore, the primer layer can be materially bonded simultaneously to the protection ply. In the present application, the term co-bonding is defined as simultaneously curing one uncured composite part while bonding the uncured composite part to a hardened part or a previously-cured composite part. Additionally or alternatively, the protection ply can be materially bonded simultaneously with structure parts, which are installed on the substrate.

In other words the present invention can be described as follows. The Invention contains the proposal for integration of liner protection features as part of the fuselage skin. The skin can be made e.g. out of FML (Fiber Metal Laminate) or monolithic metallic material. It is applicable for the fuel tank areas, where the installation of a protective liner is required. Used materials, technology and/or manufacturing process differentiate this invention from prior solutions.

The method for manufacturing a structural component may basically comprise the following manufacturing process:
- The protection ply can be applied on top of bond primer in one-shot bonding. The term one-shot bonding in the meaning of this application is a manufacturing process with all in one bonding.
- The protection ply can be applied on top of bond primer in second-shot bonding. Optionally without autoclave cycle. Only an oven with 1 bar vacuum is needed. The term second-shot bonding in the meaning of this application is a manufacturing process with additional bonding steps.

- The protection ply can be applied on top of bond primer in second-shot bonding with autoclave cycle. The protection ply could be applied simultaneously with e.g. stringer bonding or the like.

The above embodiments and further developments can be combined with one another arbitrarily, as far as appropriate. Further possible configurations, developments and implementations of the invention are also combinations of features of the invention described above or below for the exemplary embodiments that are not explicitly cited. In particular, a person skilled in the art will also add individual aspects as improvements or additions to the respective basic form of the present invention.

The present invention is explained more specifically below on the basis of the exemplary embodiments indicated in the schematic figures, in which:
- Fig. 1: shows a schematic illustration of a structural component according to an embodiment of the invention in a cut section view;
- Fig. 2: shows a schematic illustration of a structural component for an aircraft or spacecraft fuselage according to a further embodiment of the invention;
- Fig. 3: shows a schematic illustration of an aircraft comprising a structural component according to a further embodiment of the invention; and

- Fig. 4: shows a flow chart for a method for manufacturing a structural component according to a further embodiment of the invention.

The accompanying figures are intended to convey a further understanding of the embodiments of the invention. They illustrate embodiments and are used in conjunction with the description to explain principles and concepts of the invention. Other embodiments and many of the cited advantages emerge in light of the drawings. The elements of the drawings are not necessarily shown to scale in relation to one another. Direction-indicating terminology such as for example "at the top", "at the bottom", "on the left", "on the right", "above", "below", "horizontally", "vertically", "at the front", "at the rear" and similar statements are merely used for explanatory purposes and do not serve to restrict the generality to specific configurations as shown in the figures.

In the figures of the drawing, elements, features and components that are the same, have the same function and have the same effect are each provided with the same reference signs - unless explained otherwise.

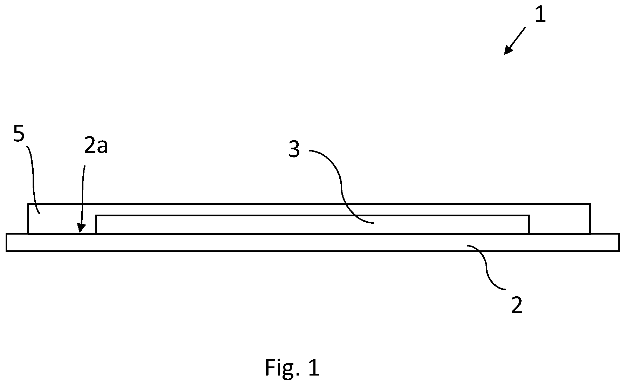

Fig. 1 shows a schematic illustration of a structural component 1. The structural component 1 comprises a substrate 2, a protection ply 3 and optionally a primer layer 5.

The substrate 2 includes an inner surface 2a. The protection ply 3 is configured for avoiding a destruction of a corrosion protection of the substrate 2. Thereby, the protection ply 3 is materially bonded to the inner surface 2a.

Additionally, the primer layer 5 can be disposed on the protection ply 3. For example, the primer layer 5 can be disposed on a side of the protection ply 3, which is facing away from the substrate 2 in relation to the protection ply 3. The primer layer 5 can be disposed on the protection ply 3 and on the inner surface 2a of the substrate 2 in an area, where the protection ply 3 is not present. That means, the primer layer 5 can coat the complete inner side of the structural component 1, so the protection ply 3 and the area of the inner surface 2a of the substrate, where the protection ply is omitted. The primer layer 5 can be configured as a basic primer, which can be applied after bonding on complete surface including the protection ply 3.

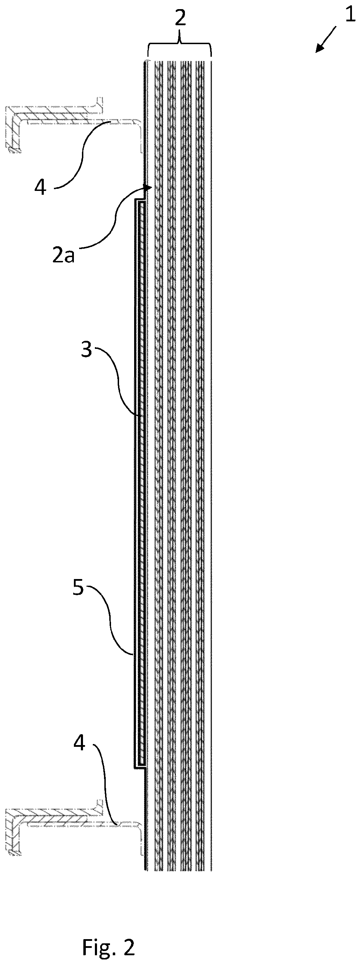

Fig. 2 shows a schematic illustration of a structural component 1 for an aircraft fuselage or a spacecraft fuselage. More specifically, a section of the structural component 1 in a cut view is shown. The structural component 1 comprises a substrate 2, a protection ply 3, exemplarily structure parts 4 and optionally a primer layer 5.

The substrate 2 includes an inner surface 2a. The protection ply 3 is configured for avoiding a destruction of a corrosion protection of the substrate 2. Thereby, the protection ply 3 is materially bonded to the inner surface 2a. In particular, the substrate 2 is configured for an aircraft skin.

Furthermore, the protection ply 3 can comprise a composite material. For example, the composite material may comprise a glass fiber reinforced fabric prepreg or an uni-directional glass fiber reinforced prepreg. Alternatively, the composite material may comprise an epoxy film and/or adhesive film. For example, the composite material comprises the epoxy film and/or adhesive film without a glass reinforcement.

In this example, the substrate 2 is configured as a fiber metal laminate (FML). The FML 2 contains metal layers and an adhesive layer placed between and bonded to the metal layers. That means the FML 2 can be configured as a sandwich structure with outer metal layers and the inner adhesive layer, but is not limited to such a substrate 2. Alternatively, the substrate 2 can comprise a monolithic metallic material, in particular a monolithic aluminum or an aluminum alloy, for example.

Further, the protection ply 3 can be materially bonded to one of the metal layers that corresponds to the inner surface 2a of the substrate 2. In Fig. 2 the metal layer that corresponds to the inner surface 2a of the substrate 2 is on the left hand side of the substrate 2. Hence, the protection ply 3 can be installed on the substrate 2 on a subcomponent level with lower manufacturing costs.

The structure parts 4 are exemplarily installed on the substrate 2, wherein the protection ply 3 extends at least in sections between the structure parts 4. Thus, the protection ply 3 can be combined with existing structure parts 4 like a stringer or a frame or both. The frame and/or the stringer may be elongated structural stiffeners extending laterally and/or perpendicular relative to a longitudinal direction of the aircraft fuselage. In some embodiments of the invention, the frames may cross the stringers in a grid-like configuration.

The primer layer 5 can be disposed on the protection ply 3. For example, the primer layer 5 can be disposed on a side of the protection ply 3, which is facing away from the substrate 2 in relation to the protection ply 3. The primer layer 5 can be disposed on the protection ply 3 and on the inner surface 2a of the substrate 2 in an area, where the protection ply 3 is not present. That means, the primer layer 5 can coat the complete inner side of the structural component 1, so the protection ply 3 and the area of the inner surface 2a of the substrate, where the protection ply is omitted. The primer layer 5 can be configured as a basic primer, which can be applied after bonding on complete surface including the protection ply 3.

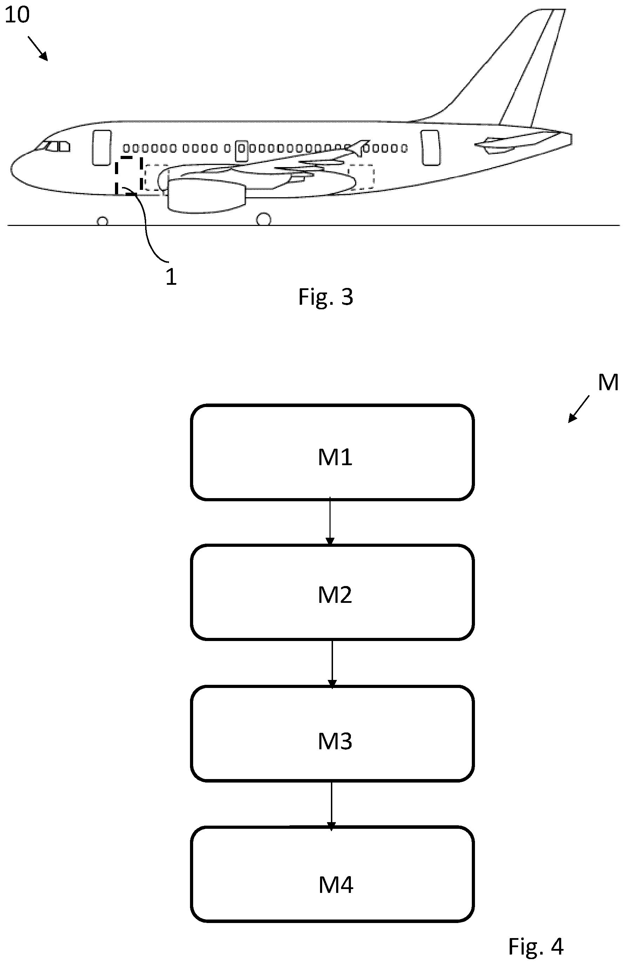

Fig. 3 shows a schematic illustration of an aircraft 10 comprising a structural component 1. More specifically, the aircraft 10 comprises a fuselage having the structural component 1, wherein the structural component 1 is installed in a fuel tank area of the fuselage.

Fig. 4 shows a flow chart for a method M for manufacturing a structural component 1. In particular, the method M is for manufacturing a structural component 1 as illustrated and described in Fig. 1, 2 or 3.

The method comprises steps of placing M1 a substrate 2, placing M2 a protection ply 3, applying M3 heat and/or pressure and optionally placing M4 a primer layer 5.

In the step M1 the substrate 2 is placed on a form tool. 13. The substrate 2 can comprise metal layers and an adhesive layer, which are placed on the form tool as a sandwich in the order metal layer, adhesive layer and metal layer. Thus, the protection ply 3 can be implemented during an already used and applied manufacturing process, in particular a manufacturing process of the aircraft skin.

In the step M2 the protection ply 3 is placed on an inner surface 2a of the substrate 2.

In the step M3 heat and/or pressure is applied to the substrate 2 and the protection ply 3 such that the protection ply 3 materially bonds to the substrate 2. Thereby, heat and/or pressure can be applied M3 to the substrate 2 and the protection ply 3 by curing in an autoclave, for example.

Exemplarily, the substrate 2 and the protection ply 3 can be materially bonded by co-bonding. Hence, an available infrastructure and/or a manufacturing process can be used by co-bonding of the substrate 2 and the protection ply 3. Furthermore, the primer layer 5 can be materially bonded simultaneously to the protection ply 3. In the present application, the term co-bonding is defined as simultaneously curing one uncured composite part while bonding the uncured composite part to a hardened part or a previously-cured composite part. Additionally or alternatively, the protection ply 3 can be materially bonded simultaneously with structure parts 4, which are installed on the substrate 2.

In the optional step M4 the primer layer 5 is placed on the protection ply 3. The primer layer 5 can be materially bonded to the substrate 2 and/or the protection ply 3 by co-bonding together with the substrate 2 and the protection ply 3.

In the detailed description above, various features have been combined in one or more examples in order to improve the rigorousness of the illustration. However, it should be clear in this case that the above description is of merely illustrative but in no way restrictive nature. It serves to cover all alternatives, modifications and equivalents of the various features and exemplary embodiments. Many other examples will be immediately and directly clear to a person skilled in the art on the basis of his knowledge in the art in consideration of the above description.

The exemplary embodiments have been chosen and described in order to be able to present the principles underlying the invention and their application possibilities in practice in the best possible way. As a result, those skilled in the art can optimally modify and utilize the invention and its various exemplary embodiments with regard to the intended purpose of use. In the claims and the description, the terms "including" and "having" are used as neutral linguistic concepts for the corresponding terms "comprising". Furthermore, use of the terms "a", "an" and "one" shall not in principle exclude the plurality of features and components described in this way.

While at least one exemplary embodiment of the present invention(s) is disclosed herein, it should be understood that modifications, substitutions and alternatives may be apparent to one of ordinary skill in the art and can be made without departing from the scope of this disclosure. This disclosure is intended to cover any adaptations or variations of the exemplary embodiment(s). In addition, in this disclosure, the terms "comprise" or "comprising" do not exclude other elements or steps, the terms "a" or "one" do not exclude a plural number, and the term "or" means either or both. Furthermore, characteristics or steps which have been described may also be used in combination with other characteristics or steps and in any order unless the disclosure or context suggests otherwise. This disclosure hereby incorporates by reference the complete disclosure of any patent or application from which it claims benefit or priority.

### Reference list

- 1: structural component
- 2: substrate
- 2a: inner surface of the substrate
- 3: protection ply
- 4: structure parts
- 5: primer layer
- 10: aircraft

- M: method
- M1: placing a substrate
- M2: placing a protection ply
- M3: applying heat and/or pressure
- M4: placing a primer layer

## Claims

1. Structural component (1), in particular for an aircraft or spacecraft fuselage, comprising:
a substrate (2) having an inner surface (2a); and
a protection ply (3) for avoiding a destruction of a corrosion protection of the substrate (2), wherein the protection ply (3) is materially bonded to the inner surface (2a) of the substrate (2).

2. Structural component (1) according to claim 1, further comprising structure parts (4), which are installed on the substrate (2), wherein the protection ply (3) extends at least in sections between the structure parts (4).

3. Structural component (1) according to claim 2, wherein the structure parts (4) are configured as a stringer or a frame or both.

4. Structural component (1) according to one of the preceding claims, wherein the protection ply (3) comprises a composite material.

5. Structural component (1) according to claim 4, wherein the composite material comprises a glass fiber reinforced fabric prepreg.

6. Structural component (1) according to claim 4, wherein the composite material comprises an uni-directional glass fiber reinforced prepreg.

7. Structural component (1) according to claim 4, wherein the composite material comprises an epoxy film and/or adhesive film.

8. Structural component (1) according to one of the preceding claims, further comprising a primer layer (5), which is disposed on the protection ply (3).

9. Structural component (1) according to one of the preceding claims, wherein the substrate (2) comprises a laminate having metal layers and an adhesive layer placed between and bonded to the metal layers.

10. Structural component (1) according to claim 9, wherein the protection ply (3) is materially bonded to one of the metal layers that corresponds to the inner surface (2a) of the substrate (2).

11. Method (M) for manufacturing a structural component, in particular for an aircraft or spacecraft fuselage, in particular for a structural component (1) according to one of the preceding claims, comprising the method steps of:
- placing (M1) a substrate (2) on a form tool;
- placing (M2) a protection ply (3) on an inner surface (2a) of the substrate (2); and
- applying (M3) heat and/or pressure to the substrate (2) and the protection ply (3) such that the protection ply (3) materially bonds to the substrate (2).

12. Method (M) according to claim 11, further comprising a step of placing (M4) a primer layer (5) on the protection ply (3).

13. Method (M) according to claim 11 or 12, wherein the substrate (2) comprises metal layers and an adhesive layer, which are placed on the form tool as a sandwich in the order metal layer, adhesive layer and metal layer.

14. Method (M) according to one of the claims 11 to 13, wherein the substrate (2) and the protection ply (3) are materially bonded by co-bonding.

15. Aircraft (10) or spacecraft comprising a fuselage having a structural component (1) according to one of the claims 1 to 10 and/or a structural component (1) manufactured according to one of the claims 11 to 14, wherein the structural component (1) is installed in a fuel tank area of the fuselage.
